# EUROPEAN PATENT APPLICATION

(11) **EP 4 276 646 A1**
(43) Date of publication of application: **15.11.2023**
(21) Application number: 22172715.9
(22) Date of filing: 11.05.2022
(51) Int. Cl.: G06F 16/182, G06F 3/06, H04L 9/00

(54) **DISTRIBUTED LEDGER AND PERSISTENCE STORAGE REPOSITORY**

(71) Applicant: Siemens Aktiengesellschaft, 80333 München (DE)
(72) Inventor: Singh, Saurabh Narayan, 81739 München (DE); Zupan, Nejc, 80337 München (DE)
(74) Representative: Siemens Patent Attorneys

(57) **Abstract**

Various examples of the disclosure pertain to persistence storage solutions associated with a distributed ledger. For instance, on-chain and off-chain storage of a blockchain can be facilitated, in a technology-agnostic manner.

## Description

### BACKGROUND

Various aspects of the disclosure generally relate to operating a node of a network of nodes that maintains a distributed ledger such as a blockchain. Various aspects of the disclosure specifically relate to interfacing a persistence storage repository associated with the node of the network.

### BACKGROUND

Blockchain applications store the data in a decentralized manner. A blockchain is an example implementation of a distributed ledger that is stored in a replicated manner across multiple nodes of a respective network.

This allows decentralized governance and monitoring of transactions associated with the data (smart contracts), where an individual entity cannot make changes to the transactions in an unrestricted malicious manner.

Under certain situation, it can be desirable to pair storage of data in the distributed ledger with storage of further data in a persistence storage repository (PSR). The PSR implements a non-distributed, conventional database and can be, e.g., locally associated with one of the network nodes of the network that is maintaining the distributed ledger (distributed database system, DBS). Such storage of data in a PSR and in the framework of a distributed ledger is also referred to as off-chain storage.

In reference implementations of such PSR, oftentimes a custom integration of the PSR into the DBS is required. This prevents scalable solutions, because typically each party of a consortium associated with the distributed ledger would be required to undergo the same effort of custom integration. Additionally, sharing data that is stored in the PSR with other parties can be difficult due to the custom integration of the PSR. Furthermore, oftentimes the integration of a PSR is tied to a specific technological implementation of the non-volatile memory used by the PSR; changes to the technological implementation that would require a re-integration of the PSR.

### SUMMARY

Accordingly, a need exists for advanced techniques of interfacing with PSRs in the context of DBSs. A need exists for techniques that alleviate or mitigate at least some of the above-identified restrictions and drawbacks.

This need is met by the features of the independent claims. The dependent claims define embodiments.

Hereinafter, techniques are disclosed that facilitate technology-agnostic set-up and operation of PSRs in the framework of a DBS. Thereby, off-chain storage of payload data is facilitated.

A computer-implemented method of operating a node of a network of nodes is disclosed, i.e. a DBS. The network maintains a distributed ledger of smart contracts amongst multiple parties. The node operates a backend connection towards a PSR. The method includes obtaining a storage request message via a frontend connection from a client. The storage request message requests to store a transaction in the distributed ledger, as well as to store payload data in the PSR. Both, the transaction as well as the payload data are associated with a (common) smart contract. The method also includes storing the transaction in the distributed ledger. Furthermore, the method includes establishing at least one party of the multiple parties that is associated with the transaction and determining, based on a look-up table, whether a partition of the PSR is available that is associated with the at least one party. The method also includes, responsive to determining that the partition of the PSR is available, triggering storage of the payload data in the partition of the PSR.

Thus, it would be possible that the PSR is associated with the node that operates the backend connection. It would be possible that the PSR is only associated with that node. Other nodes of the DBS may interface other PSRs.

The PSR can include a non-volatile memory that can store the payload data. Different storage formats and memory types could be used, defining the specific technology of the PSR.

By triggering the storage of the payload data in the partition of the PSR, an off-chain storage of the payload data is facilitated. For instance, it would be possible that the transaction includes a pointer or an identifier associated with the payload data. The transaction may include a checksum of the payload data that is stored in the DBS. The transaction may be signed by at least one of the at least one party associated with the smart contract underlying the transaction and the payload data. It would be possible that the transaction is signed by all parties that are associated with the smart contract.

The PSR can be partitioned into multiple partitions. Each partition can be associated with one or more parties of the multiple parties that cooperate by means of the distributed ledger and the DBS (consortium of parties). A respective bookkeeping may be implemented by a look-up table. The lookup table can store a mapping between partitions and one or more parties (or specifically combinations of parties) that have access. The look-up table could store access rules for each partition. For instance, each partition could be associated with a combination of multiple parties. A smart contract defines interactions between two or more parties. Respectively, each transaction and associated payload data can be stored in the respective partition that is associated by that combination of two or more parties. Only those parties may have read-access to the partition. It would be possible that only the party operating the node interfacing the PSR has write-access to the partition. It would be possible that each entry in the look-up table also specifies respective access rules for the respective partition.

The partition can be a logical fraction of the memory at the PSR that is characterized by certain access rules.

Various access rules are possible. For example, only parties of a certain combination of parties associated with a partition may have read-access to the payload data in that partition. Only the party associated with the node interfacing the PSR may have right-access to the payload data and that partition. The access rules may specify whether each write-access to the payload data needs to be authorized by the respective combination of parties, e.g., using certain polling rules. In a further scenario, it would be possible that each partition is associated with an owner party and one or more counterparties. Here, the owner party may have read and write access, wherein the one or more counterparties may only have read access.

To avoid unauthorized tampering with the access rules, it would be possible that the look-up table including the access rules is stored in the distributed ledger.

By maintaining the partitions of the PSR, a standardized interfacing towards multiple clients operated by multiple parties becomes possible. Specifically, clients can query storage of payload data to the PSR or retrieval of payload data from the PSR via the frontend connection and then the network node can execute such task by communicating via the backend connection. This is different to reference implementations where maintenance of a PSR is implemented by each client individually and at least partly or fully transparent to the nodes of the network that is maintaining the distributed ledger. With payload data being transferred through the nodes of the DBS, integrity of the off-chain stored payload data is higher compared to the alternative, where every client is separately handling off-chain storage. In the illustrated scenario, the particular technology of the PSR is then transparent to the clients. This enables changing the technology of the PSR without requiring changes to the protocol executed by the clients.

Unless explicitly stated otherwise the terms "perform", "calculate", "computer-implemented", "calculate", "establish", "generate", "configure", "reconstruct" and the like preferably relate to actions and/or processes and/or processing steps which modify data and/or which generate data and/or which transform data in other data. Data can be represented by physical quantities or be present as physical quantities, e.g., as electrical pulses. In particular, the term "computer" should be interpreted broadly to cover all electronic devices having data processing capabilities. Computers can, thus, be implemented by personal computers, servers, memory programmable controllers, handheld computer systems, pocket PC devices, wireless communication devices and other communication devices that can process data, processors and other electronic devices for processing data.

In the context of the present disclosure "computer-implemented" can relate to an implementation of a method in which a processor performs at least one method step.

A processor in the context of the present disclosure can be a machine or electronic circuit. A processor can be specifically implemented by a central processing unit (CPU) or a microprocessor or a microcontroller, e.g., an application-specific integrated circuit (ASIC) or a digital signal processor, possibly in combination with a memory unit for storing program code, etc. A processor can alternatively or additionally be implemented by an integrated circuit (IC), specifically a field programmable gate array (FPGA), an ASIC or a digital signal processor (DSP) or a graphic processing unit (GPU). Alternatively or additionally, a processor can be implemented by a virtual processor or a virtual machine or a soft CPU. A processor can be implemented by a programmable processor having configuration interfaces that facilitate configuration of various techniques described herein. The programmable processor can be configured to implement method steps as described herein, components, modules, or other aspects of the techniques described herein.

A "memory unit" or "memory module" or the like can be implemented by a volatile memory in the form of random access memory (RAM) or a non-volatile memory such as a hard disc or data carrier.

A "module", in the context of the present disclosure, can be implemented by a processor and/or a memory unit for storing program instructions. A module can be implemented in hardware and/or software and/or firmware. For example, the processor can be configured to execute the program instructions such that the processor executes functions that implement methods or steps of a method as described herein. A module can also be a node of a DBS that implements specific functions/features of the respective module. The respective modules can, e.g., be implemented as separate/individual modules. For this, the respective modules can include further elements. For example, these further elements can be one or more interfaces (e.g., database interfaces, communication interfaces - e.g., a network interface or WLAN interface) and/or an evaluation unit (e.g., a processor) and/or a memory unit. By means of the interfaces, it is possible to exchange data (e.g., to receive, communicate, transmit or provide data). By means of an evaluation unit, it is possible to compare, validate, process, assign or calculate data in a computer-implemented and/or automated manner. By means of the memory unit, data can be stored, retrieved or provided in a computer-implemented and/or automated manner. It would also be possible that multiple modules are implemented by a common processor.

The term "include" - specifically with respect to data and/or information - can relate to a (computer-implemented) storing of respective information or the respective date in a data structure/data set (which, e.g., in turn is also stored in a memory unit) in the context of the present disclosure.

The term "assign" - specifically in relation to data and/or information - can relate to a computer-implemented assignment of data and/or information in connection with the present disclosure. For example, a first date is assigned, by means of a memory address or a unique identifier, a second date, e.g., by storing the first date together with the memory address or the unique identifier of the second date in a data set. This also pertains to data being "in association" with other data.

The term "providing" - in particular in regard to data and/or information - can relate to a computer-implemented providing in connection with the present disclosure. Said providing may be implemented by an interface, e.g., a database interface, a network interface, an interface to a memory unit. It is possible that respective data and/or information are communicated and/or transmitted and/or retrieved and/or received when providing via the interface.

The term "providing" can also relate to a loading or saving, e.g., of a transaction together with respective data in the context of the present disclosure. For example, this can be implemented on or by a memory module.

The term "providing" can also relate to communicating (or transmitting or receiving or transfer) of respective data from a node to another node of the blockchain or the DBS (respectively of the corresponding infrastructure) in the context of the present disclosure.

A "smart-contract process" can refer to the execution of program code, e.g., of a control instruction, in a process by means of the DBS or the respective infrastructure.

A "checksum", e.g., a data-block checksum, a data checksum, a node checksum, a transaction checksum, a chaining checksum or the like can relate to a cryptographic checksum or a cryptographic hash or hash value, in the context of the present disclosure. Such checksums can, in particular, be determined across a data set and/or data and/or one or more transactions and/or a subsection of a data block, e.g., the block header of a block of the blockchain or the data block header of a data block of a DBS or only a part of the transaction of a data block. A checksum can be specifically implemented by a checksum or checksums or a hash value or hash values of a hash tree, e.g., a Merkle tree, a Patricia tree. Moreover, a "checksum" can also be implemented by a digital signature or a cryptographic message authentication code. By means of checksums, it is possible to implement cryptographic protection/protection against manipulation for transactions and the associated data and datasets on various levels of the DBS. For example, if there is a need for an increased level of security, it would be possible to create and validate checksums on transaction level. For example, if a reduced level of security is required, then it would be possible to create and validate checksums on block level - e.g., across the entire block or only across a part of the data block (e.g., sub-blocks) and/or a part of the transaction.

A "data-block checksum" can relate to a checksum which is calculated across a part or all transactions of a data block in the context of the present disclosure. A node can validate/determine the integrity/authenticity of the respective part of the data block by means of data-block checksums. Alternatively or additionally, the data-block checksum can also be formed across transactions of a preceding data block/predecessor data block. The data-block checksum can, in particular, be implemented by means of a hash tree, e.g., a Merkle tree [1] or a Patricia tree. Here, the data-block checksum can be the root checksum of the Merkle tree of the Patricia tree or of another binary hash tree. It would be possible that transactions are saved by means of further checksums from the Merkle tree or the Patricia tree, respectively, e.g., by using the transaction checksums, wherein in particular the further checksums can relate to leaves of the Merkle tree or the Patricia tree, respectively. The data-block checksum can, thereby, protect the transaction by forming the root checksum from the further checksums. The data-block checksum can, in particular, be calculated for the transactions of a specific data block of the data blocks. In particular, such a data-block checksum can be included in a subsequent data block of the given data block, e.g., to chain this subsequent data block with the preceding data blocks and, in particular to make the integrity of the DBS testable. Thereby, the data-block checksum can implement the chaining checksum or, at least, go into the chaining checksum. The header of a data block (e.g., of a new data block or a data block for which the data-block checksum is determined) can include the data-block checksum.

A "transaction checksum" can relate to a checksum which is determined across a transaction of a data block, in connection with the present disclosure. In addition, the calculation of the data-block checksum of a respective data block can be accelerated, because for this already calculated transactions checksums can be readily used as leaves of a Merkle tree.

A "chaining checksum" in the context of the present disclosure can relate to a checksum which for the respective data block of a DBS indicates or references to a preceding data block of the DBS - which is often referred to as "previous block hash" in literature [1]. For this, in particular, a respective chaining checksum is determined for the preceding data block. The chaining checksum can be implemented, e.g., by a transaction checksum or a data-block checksum of a data block, i.e., of an existing data block of the DBS; to thereby chain a new data block with a (existing) data block of the DBS. For example, it would also be possible that a checksum is determined across a header of the preceding data block or across the entire preceding data block to be used as a chaining checksum. For example, this could also be calculated for multiple or all of the preceding data blocks. For example, the chaining checksum could also be implemented by a checksum determined across the header of a data block in the data-block checksum. A respective data block of the DBS includes, however, preferably a chaining checksum that has been calculated or relates to a preceding data block, specifically, the next-neighbor preceding data block directly adjacent to the respective data block. For example, it would also be possible that a respective chaining checksum is determined only across a part of the respective data block, e.g., the preceding data block. Thereby, a data block can be implemented which has an integrity protected part and a non-protected part. Thereby, a data block can be implemented that has a non-changeable integrity protected part and that has a non-protected part that can be modified later on. Integrity protected can mean that a change of the integrity protected data can be detected by means of a checksum.

Next, example implementations of a transaction are described.

The data - that is, e.g., stored in a transaction of a data block - can be provided in various manners. Instead of data - e.g., user data such as measurement data or data/ownership structure regarding ASICs - a transaction of a data block can rather include the checksum for such data. The respective checksum can be implemented in various manners. For example, a respective data-block checksum of a data block, e.g., including the respective data, of another database or of the distributed ledger, a transaction checksum of a data block of the respective data, e.g., of the distributed ledger or of another database, or a data checksum determined across the data can be used.

In addition, the respective transaction can optionally include a link to or an indication of a memory position - e.g., an address of a file server and indications where the respective data are to be found on the file server; or an address of another distributed ledger which includes the data. The respective data could, e.g., also be provided in a further transaction of a further data block of the distributed ledger - e.g., if the respective data and the associated checksums are included in different data blocks. It would also be possible that those data are provided via another communication channel - e.g., via another database and/or a cryptographically-secured communication channel.

Further, it would be possible that in addition to the checksum an add-on data set - e.g., a link or an indication to a memory position - is provided in the respective transaction. The add-on data set can, in particular, indicate where the data can be retrieved. This can be helpful to limit the amount of data of the blockchain or of the distributed ledger.

The term "security protected" can, specifically, relate to a protection that can be implemented by a cryptographic method. For example, this can be implemented by using a DBS for the providing or communication or transmitting of respective data/transactions. This can be implemented by a combination of the various checksums - e.g., cryptographic -, by appropriate synergetic interaction between the checksums, to, e.g., increase the security or the cryptographic security for the data of the transactions. In other words, "security protected" in the context of the present disclosure can also relate to "cryptographically protected" and/or "protected against manipulation", wherein "protected against manipulation" can also be referred to as "protected integrity".

Insertion of transactions into a distributed ledger can include chaining of data blocks of a distributed ledger. The term "chaining of data blocks of a distributed ledger" in the connection of the present disclosure can relate to the data blocks respectively including information (such as the chaining checksum) which links to another data block or multiple other data blocks of the distributed ledger [1], [4], [5].

Insertion of transactions into a distributed ledger can include saving/storing the transactions in one or more data blocks of the distributed ledger.

Insertion of transactions can include validating and/or confirming transactions.

The term "insertion of transactions into the distributed ledger" and the like (specifically, storing a transaction in a distributed ledger) can relate to communicating a transaction or transactions or a data block including the transactions to one or more nodes of a DBS. If those transactions are successfully validated, e.g., by means of the one or more nodes, these transactions can be chained as a new data block with at least one existing data block of the distributed ledger [1], [4], [5]. For this, the respective transactions are stored in a new data block. In particular, this validating and/or chaining can be implemented by a trusted node, e.g., a mining node, a blockchain oracle or a blockchain platform.

In particular, a blockchain can relate to a blockchain as a service, such as has been proposed by Microsoft or IBM. In particular, trusted nodes and/or other nodes can deposit a node checksum, e.g., a digital signature, in a data block, e.g., in a data block that has been validated by the respective node and which is then chained, in particular to facilitate identification of the creator of the data block and/or identification of the node. Here, the node checksum indicates which node has chained the respective data block with at least one other data block of the distributed ledger.

A "transaction" or "transactions" in connection with the present disclosure can relate to a smart contract [4], [5], a data structure or a transaction data set, which, in particular, respectively include a transaction or multiple transactions. The term "transaction" or "transactions" can also relate to the data of a transaction of a data block of a blockchain, in connection with the present disclosure. A transaction can, e.g., include a program code which, e.g., implements a smart contract. For example, a transaction can also relate to a control transaction and/or a confirmation transaction in the context of the present disclosure. Alternative, a transaction can also be implemented by a data structure which saves the data (e.g., the control instructions and/or the contract data and/or other data such as video data, user data, measurement data etc.).

In particular, the term "saving transactions in data blocks", "saving transaction" and the like can relate to a direct saving or indirect saving. A direct saving can relate to the respective data block of the distributed ledger or the respective transaction of the distributed ledger including the respective data. An indirect saving can relate to the respective data block or the respective transaction including a checksum and, optionally, an add-on data set, e.g., a link to or an indication of a memory location for respective data; hence, the respective data are not directly saved in the data block (or the transaction). Rather, a checksum is provided for these data in the data block. In particular, these checksums can be validated when saving transactions in data blocks, such as has been explained above with respect to "inserting into the distributed ledger".

A "program code" - such as a smart contract - can relate to a program instruction or multiple program instructions which are saved in one or more transactions, in connection with the present disclosure. The program code can be executable and can be executed, e.g., by the DBS. This can be implemented, e.g., by a runtime environment, e.g., of a virtual machine, wherein the runtime environment or the program code are preferably Turing complete. The program code is preferably executed by the infrastructure of the DBS [4], [5]. Here, a virtual machine is implemented by the infrastructure of the DBS. It is possible to execute the program code when validating a corresponding transaction.

A "smart contract" can relate to an executable program code in connection with the present disclosure [4], [5] - see, in particular, explanations with respect to "program code" provided above. The smart contract is preferably saved in a transaction of the distributed ledger - e.g., a blockchain -, e.g., in a data block of the distributed ledger. For example, the smart contract can be executed in the same manner as has been described in connection with the definition of "program code", in particular in connection with the subject disclosure.

The term "proof of work" can relate to solving a computationally expensive task, in particular, depending on the content of a data block or the content of a specific transaction, in connection with the present disclosure [1], [4], [5]. Such a computationally expensive task can also be referred to as cryptographic puzzle.

The term "distributed ledger", which can also be referred to simply as "distributed database", can generally relate to a decentralized, distributed database, a blockchain, a distributed memory system, a distributed ledger technology (DLT) based system (DLTS), a revision secure database system, a cloud, a cloud-service, a blockchain in a cloud or a peer-to-peer database system, in the context of the present disclosure. Also, various implementations of a blockchain or of a DLTS can be used, e.g., such as a blockchain or a DLTS that is implemented by means of a directed acyclic graph (DAG), a cryptographic puzzle, a hash graph or a combination of these variants [6], [7]. It would also be possible to implement different consensus algorithms. For example, a consensus algorithm can be implemented by means of a cryptographic puzzle, a gossip about gossip, a virtual voting or a combination of such techniques (e.g., gossip about gossip combined with virtual voting) [6], [7]. For example, if a blockchain is used, then this can, in particular, be implemented by a bitcoin-based implementation or an Ethereum-based implementation [1], [4], [5]. The term "distributed database" can also relate to a DBS that has at least a part of its nodes and/or devices and/or infrastructure implemented by a cloud. For example, the respective components can be implemented as nodes/devices in the cloud (e.g., as virtual nodes in a virtual machine). This can be implemented by WMware, Amazon web services or Microsoft Azure. Due to the increased flexibility of the described implementation scenarios, it is, in particular, possible to combine partial aspects of the described implementation scenarios with each other, e.g., by using a hash graph as blockchain, wherein the blockchain itself can also be a block batch.

For example, if a directed acyclic graph (DAG) is used (e.g., IOTA or Tangle), transactions or blocks or nodes of the graph are connected with each other via directed edges. I.e., (all) edges are (always) having the same direction, e.g., as observed for time. In other words, it is, in particular, not possible to propagate through or visit transactions or blocks or nodes of the graph backwards (i.e., opposite to the common unified direction). Acyclic means, in particular, that there are no loops or ring closures when traversing the graph. For example, a distributed ledger can relate to a public distributed ledger (e.g., a public blockchain) or a closed (private) distributed databased system (e.g., a private blockchain).

For example, in the case of a public distributed ledger, the nodes and/or devices can join the DBS without proof of authorization or authentication or login credentials, respectively be accepted by the DBS without such information. In particular, in such a case the operator of the nodes and/or devices can remain anonymous.

For example, in the case of implementation of the distributed ledger by a closed database system, new nodes and/or devices can require a valid proof of authorization and/or valid authentication information and/or valid credentials and/or valid login information to join the DBS or be accepted by the DBS. A respective consortium of parties may require consensus for accepting a new party.

A DBS can also be implemented by a distributed communication system for data exchange. For example, this can be a network or a peer-to-peer network.

The term "data block" - that can be, depending on the context and implementation, also be referred to as "constituent" or "block" - can refer to, in the context of the present disclosure, a data block of a distributed ledger - e.g., a blockchain or a peer-to-peer database -, which are, in particular, implemented as a data structure and, preferably, include one of the transactions or multiple of the transactions. In an implementation, the database or the database system can be a DLT based system (DLTS) or a blockchain and the data block can be a block of the blockchain or of the DLTS.

As a general rule, a data block can, e.g., include indications of the size - e.g., data volume in bytes- of the data block, a data block header (block header), a transaction counter and one or more transactions [1]. The data block header can include a version, a chaining checksum, a data-block checksum, a timestamp, a proof of work, a Nonce - i.e., a unique value, a random value or a counter which is used for the proof of work [1], [4], [5]. A data block can, e.g., also simply relate to a respective memory range or address range of the overall data that is stored in the DBS. Thereby, it is possible to implement blockless DBS such as the IOT chain (ITCA), IOTA, Byteball, etc. Here, the functionality of the blocks of a blockchain and of the transactions are combined with each other in such a manner that, e.g., the transactions themselves secure the sequence or chains of transactions of the distributed ledger, such that they are, in particular, saved in a secured manner. For this the transactions can be chained by means of a chaining checksum, e.g., by using a separate checksum or the transaction checksum of one or more transactions as chaining checksum, which is saved in a new transaction in the distributed ledger when storing the new transaction in the distributed ledger. In such a scenario, a data block can, e.g., also include one or more transactions, wherein in a simple scenario a data block relates to a single transaction.

The term "Nonce" can relate to, in connection with the present disclosure, a cryptographic nonce - which is an abbreviation for "used only once" [2] or "number used once" [3]. In particular, a Nonce indicates individual numbers or a combination of letters that is preferably only used once in the respective context, e.g., transaction, data communication.

The term "preceding data blocks of a (given) data block of the distributed ledger" can relate, in connection with the present disclosure, e.g., to the data block of the distributed ledger that is a direct predecessor of the (given) data block. Alternatively, the term "preceding data blocks of a (given) data block of the distributed ledger" can also relate to all data blocks of the DBS that precede the given data block. Thereby, the chaining checksum or the transaction checksum can be determined across the direct preceding data block (respectively the transactions thereof) or all data blocks preceding the given data block (respectively the respective transactions).

The terms "blockchain node", "node", "node of a DBS" and the like can relate, in the context of the present disclosure, to devices - e.g., mobile devices, wireless communication devices, computers, smartphones, clients or participants - that perform operations associated with the distributed ledger, e.g., a blockchain [1], [4], [5]. Such nodes can, e.g., execute transactions of a distributed ledger or the respective data blocks or can insert new data blocks including new transactions into the distributed ledger by means of new data blocks. In particular, this validation and/or chaining can be implemented by a trusted node, e.g., a mining node, or exclusively by trusted nodes. A trusted node is a node that has additional security measures - e.g., firewalls, access restrictions to the node or the like - to avoid manipulation of the node. Alternatively or additionally, a trusted node can, e.g., save a node checksum - e.g., a digital signature or a certificate - in the new data block when chaining the new data block with the distributed ledger. Thereby, it is possible to provide the proof that indicates that the respective data block has been inserted by a specific node, respectively indicate the originator.

As a general rule, device or the devices can be implemented by devices of a technical system and/or an industrial plant and/or an automation network and/or a fabrication plant, that can also be nodes of the DBS. Thereby, the devices can be mobile devices or devices of the Internet of things, that can also be nodes of the DBS. Nodes can, e.g., include at least one processor, e.g., to execute their computer-implemented functionality.

The term "blockchain oracle" and the like can relate, in the context of the present disclosure, to nodes, devices or computers that include a security module that has software protection mechanisms - e.g., cryptographic methods -, mechanical protection mechanisms - e.g., a lockable housing - or electric protection measures - e.g., tamper protection or a protection system that deletes data of the security module in the case of unauthorized use/modification of the blockchain oracle. The security module can include, e.g., cryptographic keys that are required for the calculation of checksums - e.g., of transaction checksums or node checksums.

The term "computer" or "device" can relate to a computer (system), a client, a smartphone, a device or a server that are arranged outside of the blockchain, respectively or are not participants of the DBS, i.e., do not execute operations of the DBS or simply retrieve those without executing transactions, inserting data blocks or calculate proof of works. Alternatively, the term "computer" or "device" can also relate to a node of the DBS. In other words, a device can in particular implement a node of the DBS or a device outside of the blockchain and the DBS, respectively. A device outside of the DBS can, e.g., access the data - e.g., the transactions or the control transactions - of the DBS. A device outside of the DBS can be controlled by nodes - e.g., by means of smart contracts and/or blockchain oracles. For example, if a control of a device - e.g., a device implemented as a node or a device outside of the DBS - is implemented by a node, then this can occur via a smart contract which, in particular, is saved in a transaction of the DBS.

### List of citations

[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Vol 21, Nr. 12 Dec. 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, 5.10.2017
[6] Leemon Baird "The Swirlds Hashgraph Consensus Algorithm: Fair, Fast, Byzantine Fault Tolerance",Swirlds Tech Report SWIRLDS-TR-2016-01, 31.5.2016
[7] Leemon Baird "Overview of Swirlds Hashgraph", 31.5.2016
[8] Blockchain Oracles, https://blockchainhub.net/blockchain-oracles/ (retrieved July 12, 2018)

A computer program or a computer program product or a computer-readable storage medium includes program code. The program code can be loaded and executed by a processor. The processor, upon loading and executing the program code, performs a method of operating a node of a network of nodes. The network maintains a distributed ledger of smart contracts amongst multiple parties. The node operates a backend connection towards a PSR. The method includes obtaining a storage request message via a frontend connection from a client. The storage request message requests to store a transaction in the distributed ledger, as well as to store payload data in the PSR. Both, the transaction as well as the payload data are associated with a (common) smart contract. The method also includes storing the transaction in the distributed ledger. Furthermore, the method includes establishing at least one party of the multiple parties that is associated with the transaction and determining, based on a look-up table, whether a partition of the PSR is available that is associated with the at least one party. The method also includes, responsive to determining that the partition of the PSR is available, triggering storage of the payload data in the partition of the PSR.

A node of a network of nodes is provided. The network maintains a distributed ledger of smart contracts amongst multiple parties. The node operates a backend connection towards a PSR. The node comprises a processor configured to obtain a storage request message via a frontend connection from a client. The storage request message requests to store a transaction in the distributed ledger, as well as to store payload data in the PSR. Both, the transaction as well as the payload data are associated with a (common) smart contract. The method also includes storing the transaction in the distributed ledger. Furthermore, the processor is configured to establish at least one party of the multiple parties that is associated with the transaction and determining, based on a look-up table, whether a partition of the PSR is available that is associated with the at least one party. The processor is also configured to, responsive to determining that the partition of the PSR is available, trigger storage of the payload data in the partition of the PSR.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates a DBS according to various examples.
FIG. 2 schematically illustrates a node of a DBS according to various examples.
FIG. 3 schematically illustrates interfacing between clients, a node of a DBS, and a PSR, respectively, according to various examples.
FIG. 4 is a flowchart of a method according to various examples.
FIG. 5 schematically illustrates multiple partitions of a PSR according to various examples.
FIG. 6 is a flowchart of a method according to various examples.

### DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques will be disclosed that pertain to operating nodes of a network of nodes that forms a DBS. The network of nodes maintains a distributed ledger. The distributed ledger can be implemented by a blockchain. In such case, the network can be referred to as blockchain network. For sake of simplicity, various examples will be disclosed hereinafter with respect to an implementation of the distributed ledger by a blockchain; however, respective techniques may be readily applied to other kinds and types of implementation of the distributed ledger, different than a blockchain.

According to various examples, a blockchain application can be facilitated by the network of nodes. The blockchain application may define interaction between multiple parties. The multiple parties can form a consortium.

A party may operate a client that is configured to interface with nodes of the DBS. The client can be implemented by the blockchain application.

To give a few examples, it would be possible that the multiple parties pertain to different suppliers along a supply chain, e.g., a food supply chain. The multiple parties could pertain to different machines or automated equipment in an industrial manufacturing process.

Hereinafter, techniques are disclosed with respect to a blockchain client and a blockchain node, the blockchain node interfacing an PSR, are disclosed. Examples of integration of various technologies of PSRs are disclosed.

Interchangeable technologies used for a PSR provides the ability to use off-chain storage for different kinds of use cases that require support for different types of payload data - e.g., file storage, document storage, record/transaction storage, blob storage - or even support different types of payload data to be stored contemporaneously.

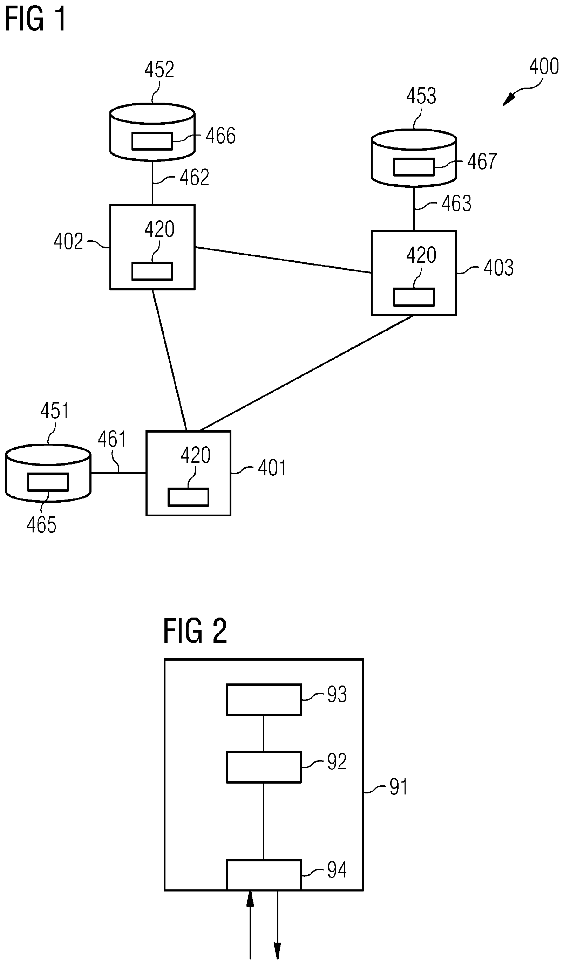

FIG. 1 schematically illustrates a DBS 400, i.e., a network formed by multiple blockchain nodes 401-403. For instance, each node 401-403 may be associated with and operated by a respective party of the consortium.

Each blockchain node 401-403 stores a local copy of the blockchain 420. Additionally, each blockchain node is connected, via a respective backend connection 461-463, to a respective PSR 451-453.

While in FIG. 1 a one-to-one correspondence between blockchain nodes 401-403 and PSRs 451-453 is illustrated, as a general rule, it would be possible that there is more than a single PSR per blockchain node.

Payload data 465-467 is stored in the respective PSRs 451-453; as a general rule, different payload data 465-467 may be stored in the multiple PSRs 451-453. It would also be possible that payload data is replicated across the PSRs 451-453.

For instance, each PSR 451-453 may store payload data associated with a smart contract that is also associated with the party operating the respective blockchain node 401-403.

As a general rule, the PSRs 451-453 can be any solution offering persistent storage capabilities (e.g., file storage, blob storage, text document storage, record storage, ...), with an ability to store and retrieve payload data.

Each PSR 451-453 can include multiple data partitions and access control is governed not at the level of the respective PSR, but rather on the level of the partitions. This allows for a fine-grained access control to the payload data stored in the PSR.

FIG. 2 schematically illustrates a node 91. The node 91 could, e.g., implement any one of nodes 401-403 of the DBS 400 of the example of FIG. 1.

The node 91 includes a processor 92 and a memory 93 and a communication interface 94. The processor 92 can receive data via the communication interface 94 and can transmit data via the interface 94, e.g., to other nodes. For instance, the processor 92 could receive a query to store (on-chain) a transaction and (off-chain) associated payload data via the interface 94. Also, the transaction or associated data, e.g., pertaining to the underlying smart contract, as well as the payload data can be received via the interface 94. The processor 92 can interface with a PSR via the interface 94. The interface 94 can support, both, a frontend connection between the node 91 and a client, as well as a backend connection between the node 91 and a PSR.

The processor 92 can load program code from the memory 93 and can then execute the program code. Upon loading the program code, the processor 92 can perform techniques as disclosed herein, e.g., with respect to storing one or more transactions in the blockchain 420; storing, in association with the one or more transactions, payload data in a PSR; off-chain storage of payload data; synchronizing payload data with one or more further PSRs; maintaining a look-up table linking partitions on a PSR with combinations of parties of a consortium; maintaining and enforcing access rules for partitions of the PSR; retrieving payload data from the PSRs; interfacing with the PSR using a predetermined protocol that may be technology-agnostic; establishing a new partition on the PSR; etc.

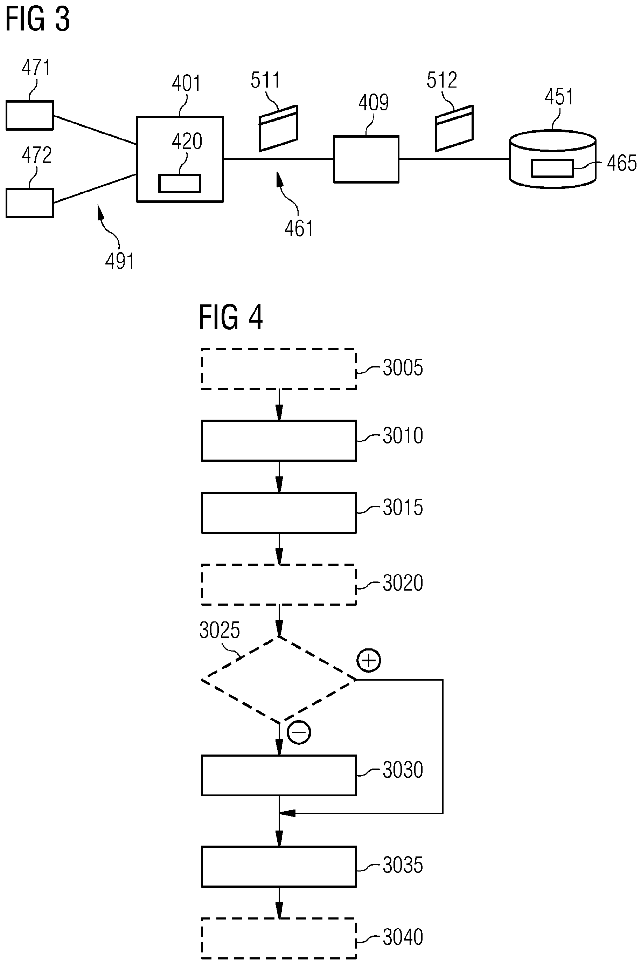

FIG. 3 schematically illustrates aspects with respect to the blockchain node 401. While FIG. 3 discloses such aspects in connection with the blockchain node 401, similar aspects are also applicable to the other blockchain nodes of a respective network, e.g., blockchain nodes 402 and 403 of the scenario of FIG. 1.

FIG. 3 schematically illustrates aspects with respect to a frontend connection 491 between the blockchain node 401 and multiple clients 471, 472; as well as a backend connection 461 between the blockchain node 401 in the respective PSR 451.

The clients 471, 472 are modules that allow blockchain applications executed at a local computer to establish a connection to the DBS 400 and invoke operations to store to or retrieve data from the blockchain 420 and/or the PSRs 451-453.

As a general rule, the standard set of operations supported by the frontend connection 491 according to reference implementations - typically, "invoke" (to retrieve a transaction) and "submit transaction" (to store the transaction in the blockchain) - can be extended by one or more operations according the techniques disclosed herein, specifically: "persist", i.e., storing payload data in the PSR; "retrieve", i.e., retrieving payload data from the PSR; "sign", i.e., sign a certain payload data that is to be stored or already stored in the PSR by a signature associated with the requesting party, thereby creating a transaction in the blockchain that includes the signature of the party and a checksum of the payload data ; and/or "validate" including a signature and payload data, thereby facilitating validation whether the payload data provided with such request matches the payload data stored in the PSR. When the owner's identity is attached and stored on-chain, an identity management system of each blockchain nodes can be used to verify the validity of the owner.

In the scenario of FIG. 3, the blockchain node 401 interfaces with the PSR 451 using a backend connection 461 and via an off-chain storage module (OCSM). The OCSM implements a controller module for the PSR 451. Each blockchain node 401-403 may have an associated OCSM.

For instance, these OCSM 409 may store a look-up table that defines which stakeholders/parties have access to the PSR 451 or, more specifically, that defines which parties have access to which partition of the PSR 451.

Access control could alternatively or additionally also be implemented by the node 401.

The look-up table may be itself stored in the blockchain. This avoids unauthorized tampering with the access rules.

Optionally, the OCSM 409 can also implement a programming interface towards the PSR 451. Thus, control commands of a control protocol 511, the control commands being exchanged between the blockchain node 401 and the OCSM 409, may be technology-agnostic with respect to the storage technology employed by the PSR 451. This means that the same control commands, e.g., for storing data, retrieving data, querying read/write permissions, to give just a few examples, may be used irrespective of the particular memory or storage technology employed by the PSR.

This enables the blockchain node to interface with the PSR using a storage-technology-agnostic control protocol. The OCSM can then convert between the storage-technology-agnostic control protocol and a technology-specific control protocol. I.e., control data of the control protocol 511 may be translated into the associated control data of another protocol 512 that specifically addresses a memory implemented by the PSR 451, or vice versa.

As will be appreciated from the above, the OCSM 409 provides standard set of programable interfaces that need to be implemented to support different PSR technologies. If selected persistence service is not already supported, then an adapter can be implemented to establish a support. Use of such approach allows application developers to use generic querying language to retrieve data without being tightly coupled to the specific persistence technology.

While in the scenario of FIG. 3 the OCSM 409 is shown as a separate entity with respect to the blockchain node 401, in some scenarios, it would be possible that the OCSM 409 is implemented by the blockchain node 401. It would also be possible that the OCSM 409 is implemented by separate hardware.

FIG. 4 is a flowchart of a method according to various examples. The method of FIG. 4 can be executed by a blockchain node of a DBS. For example, the method of FIG. 4 could be executed by the node 91 of FIG. 2. More specifically, it would be possible that the method of FIG. 4 is executed by the processor 92 upon loading program code from the memory 93 and upon executing the program code.

FIG. 4 generally relates to off-chain storage. FIG. 4 relates to aspects associated with writing, to a PSR, payload data.

Optional boxes are labeled with dashed lines in FIG. 4.

At optional box 3005, the blockchain node can be initially deployed in the DBS. The blockchain node can be configured to join the DBS. For instance, this may be responsive to a respective party newly joining the consortium of parties running a blockchain application.

A PSR associated with the blockchain node is also deployed. This can include configuring the memory technology, e.g., formatting a respective non-volatile memory, instantiating data containers, etc.

Where available, an OCSM facilitating the interfacing between the blockchain node and the PSR can be configured to access the PSR using a technology-specific control protocol. For instance, depending on the employed memory technology, different control protocols may be instantiated. Then, the blockchain node can join the DBS.

At box 3010, the blockchain node obtains a storage request message from a client. This could be labeled "persist" query. This means that a respective storage request message is received via a frontend connection that is set-up between the client and the blockchain node, after the blockchain node being deployed in the DBS.

The storage request message triggers storage of a transaction in the blockchain, as well as storage of payload data that is associated with the transaction in the PSR.

As a general rule, there are various options for how to store the payload data. For instance, a first type of storage request message, e.g., without any specific accompanying condition, can pertain to payload data that is to be available to all parties of the consortium. In this case, the payload data could be stored in its entirety in the blockchain or copies of the payload data could be replicated across all PSRs for off-chain storage. On the other hand, it would also be possible that a second type of storage request message requires restriction of access to the payload data. Only such case is considered hereinafter. Such second type of storage request message means that the payload data is only accessible and/or shared amongst one or more parties associated with the respective underlying smart contract. For instance, it would be possible that a list of respective parties is stored in a look-up table, e.g., in the blockchain. Thereby, fine-grained control for data replication is ensured. The respective payload data is stored in the PSR and access is only granted to the specified parties.

As a general rule, the storage request message could include an indicator that is indicative of whether a checksum of the payload data should be stored on-chain (e.g., in the associated transaction); and/or whether the checksum of the off-chain payload data should be stored on-chain together with the signature of an owner or generally a party associated with the underlying smart contract (e.g., in the associated transaction), to be able to identify and verify the identity at a later point in time; and/or whether the payload data is not linked to the on-chain data; and/or whether the transaction is to be signed by the respective party.

Note that the technology implemented by the PSR to store payload data is fully transparent to the client. The client does not need to communicate directly with the PSR. The client can simply query the blockchain node and the blockchain node handles the interfacing towards the PSR.

The storage request message is associated with at least one party of the consortium operating the DBS. One of the at least one party may also be operating the client. For instance, the party could be the owner of the smart contract that is associated with the transactions to be stored in the blockchain. As a general rule, it would be possible that two or more parties are associated with the underlying smart contract associated with the payload tagged for off-chain storage; for instance, two parties may agree upon a certain transaction by means of the smart contract (one of those two parties being the owner of the smart contract); then, the storage request message can also be associated with those two parties.

In any case, at box 3015, it is possible to establish at least one party of the multiple parties that is associated with the transaction. For instance, the originator or signee of the transaction could be used. An owner of the underlying smart contract could be determined. All participating parties in the respective smart contract could be used. A combination of parties, i.e., a specific set of parties, can be determined.

At box 3020, the transaction can be stored in the blockchain. For instance, the transaction could include a checksum of the payload data to be stored in the PSR. The transaction could alternatively or additionally include a signature of the requesting party. The transaction can include an identifier or pointer to the payload data.

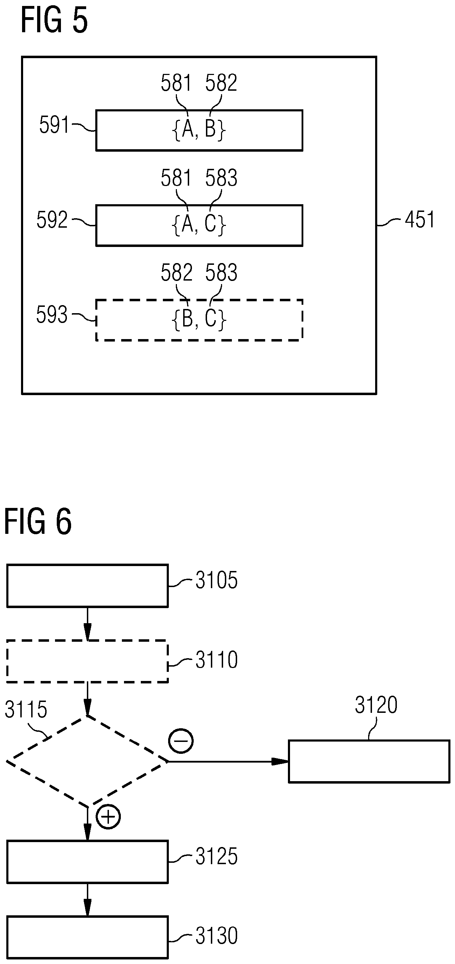

At box 3025, it is determined whether a partition of the PSR is available that is associated with the at least one party established at box 3015. Aspects in this regard are illustrated in connection with FIG. 5. FIG. 5 illustrates the PSR 451 including multiple partitions 591-593. For instance, in the scenario FIG. 5, the PSR 451 includes three partitions 591-593 (but could generally include more partitions). The partition 591 is associated with the combination of parties 581, 582; the partition 592 is associated with the combination of parties 581, 583; and the partition 593 is associated with the combination of parties 582, 583. Such mapping can be stored in the look-up table.

For instance, referring back to FIG. 4: box 3025, an exact match may be required for checking whether a partition is available at the PSR for the at least one party. For instance, if the parties associated with the storage request of box 3010 are "A" and "B", then a partition must be association with those and only those parties. Thus, a combination of multiple parties may be considered with respect to each partition of the PSR and associated access.

There is a potential case where a subset of parties (and associated blockchain nodes) has access to some payload data in PSR, whereas others do not. For example, only parties {A, B, C} have access to a certain partition of the PSR, whereas parties {B, C, D} have access to another partition stored in the PSR. With the access control defined at data partition level, each party can verify/read the payload data from other parties as well, without risking access to other payload data where that party is not involved.

If, at box 3025, it is determined that a partition of the PSR is available that is associated with the respective at least one party, the method can directly commence at block 3035; else, block 3030 is executed. At box 3030, responsive to determining that the respective partition of the PSR is not available, a creation of that partition in the PSR is triggered. This can be accomplished by interfacing with the PSR.

Specifically, the partition can be created in accordance with a predetermined configuration. Such configuration can specify parameters of the partition such as access rule, type of memory technology to be employed, replication rules, redundant storage, back-up policies, etc. By using a predetermined configuration, the creation of the partition can be automatically implemented, e.g., without requiring additional user input. The partitioning of the PSR may be transparent to the clients.

More specifically, the predetermined configuration may be associated with the at least one party. I.e., party-specific control data can be used for creation of the partition this can ensure, e.g., implementation of party-specific requirements with respect to the storage technology, etc.

At box 3030, it is also possible to add, to the look-up table, an entry that is indicative of the partition that is associated with the at least one party. For example, it would be possible that this entry to the look-up table is also indicative of at least one access rule for the access to the partition. Thereby, subsequent "retrieve" queries to read payload data can be checked for authorization by means of the look-up table (as will be explained in connection with box 3115 in FIG. 6).

At box 3035, the storage of the payload data in the PSR can be triggered in the respective partition. This includes transmitting a respective storage command defined in, e.g., a technology-agnostic protocol, towards the PSR.

In some scenarios, the node may also trigger replication of the payload data in one or more further PSRs associated with other parties of the consortium. For example, if the payload data is associated with the smart contract that is associated with multiple parties, then replication in the PSRs associated with the remaining ones of these multiple parties may be triggered. Using this, nodes can verify whether other nodes have written the correct data in their PSR. This task of verification of off-chain payload data can also be delegated to a governance consortium in a further implementation

FIG. 6 is a flowchart of a method according to various examples. The method of FIG. 6 can be executed by a blockchain node of a DBS. For example, the method of FIG. 6 could be executed by the node 91 of FIG. 2. More specifically, it would be possible that the method of FIG. 6 is executed by the processor 92 upon loading program code from the memory 93 and upon executing the program code.

FIG. 6 generally relates to off-chain storage. FIG. 6 relates to aspects associated with reading/retrieving, to a PSR, payload data.

For example, the method of FIG. 6 may be executed after executing the method of FIG. 4.

Optional boxes are labeled with dashed lines in FIG. 6.

At box 3105, a read request message to retrieve payload data is obtained via a frontend connection of the blockchain node, from a respective client. The payload data is stored in a PRS, i.e., stored off-chain.

For instance, the client requesting to receive payload data may be another client (i.e., associated with another party) if compared to the particular party that triggered storage of that payload data in the PRS.

Such read request message may be indicative of an identity of the party that requests access to the payload data.

The read request message may be agnostic of any underlying technology of the PRS.

At box 3110, the party requesting to retrieve the payload data is established. This could include reading and identity from the read request message. Alternatively or additionally, it would also be possible that the client providing the request is otherwise pre-registered at the blockchain node, along with the identity of the respective party.

Next, at box 3115, it is then possible to determine whether the requesting party is authorized to access the partition of the PRS that stores the requested payload data. This can be based on access rules of a lookup table that is, e.g., stored in the blockchain or otherwise available, the lookup table specifying a mapping between parties and partitions at the PRS.

For example, such access rules could specify that any party associated with a given partition is allowed to read payload data from that partition.

For example, such access rules could specify that only one or some parties associated with a given partition are allowed to modify payload data in that partition.

For instance, such access rules could specify a consensus requirement amongst those parties that are associated with a given partition that needs to be fulfilled for a certain party to read and/or write from or to the partition. Respective polling procedures could be specified.

If, at box 3115, it is determined that authorization is not granted, the read request message of box 3105 is rejected at box 3120. Else, at box 3125, the payload data is retrieved from the PSR. Thus, the payload data is selectively provided to the requesting client responsive to determining that this client is authorized to access the respective partition of the PSR. All this can be done using a technology-agnostic query that may be translated into a technology-specific query by an intermediate controller such as the OCSM 409. The payload data can then be provided to the client that provided the read request message at box 3105, at box 3130. Optionally, the associated transaction can be provided (which would enable validation of the payload data, e.g., if the transaction includes a checksum and optionally a signature).

Summarizing, techniques for facilitating standardized off-chain storage of payload data through blockchain nodes of a DBS have been disclosed.

Thereby, off-chain storage is natively supported by the blockchain nodes and blockchain clients, making off-chain data sharing part of the basic set of functionalities.

Vendor and technology agnostic support for PSR technologies is accomplished, thereby supporting different use cases and business needs.

The techniques disclosed herein enable higher privacy and confidentiality constraints over traditional DBS implementations.

Costs and effort of custom integration of PSR into the DBS is reduced.

Need for separate data distribution channels between parties is alleviated.

Each party has complete ownership of the off-chain payload data compared to the alternative where a single central off-chain storage endpoint is used to share off-chain data between the parties.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

## Claims

1. A computer-implemented method of operating a node (91, 401, 402, 403) of a network (400) of nodes that is maintaining a distributed ledger (420) of smart contracts amongst multiple parties (581, 582 583), the node operating a backend connection towards a persistence storage repository (451, 452, 453), the method comprising:
- obtaining, via a frontend connection (491) and from a client (471, 472), a storage request message to store a transaction associated with a smart contract in the distributed ledger (420) and to store payload data (465, 466, 467) associated with the smart contract in the persistence storage repository (451, 452, 453),
- storing the transaction in the distributed ledger (420),
- establishing at least one party of the multiple parties (581, 582 583) associated with the transaction,
- determining, based on a look-up table, whether a partition of the persistence storage repository (451, 452, 453) is available that is associated with the at least one party, and
- responsive to determining that the partition of the persistence storage repository (451, 452, 453) is available, triggering storage of the payload data (465, 466, 467) in the partition of the persistence storage repository (451, 452, 453) .

2. The computer-implemented method of claim 1, further comprising:
- responsive to determining that the partition of the persistence storage repository (451, 452, 453) is not available, triggering creation of the partition (591, 592, 593) at the persistence storage repository (451, 452, 453) in accordance with a predetermined configuration,
- adding, to the look-up table, an entry indicative of the partition (591, 592, 593) being associated with the at least one party, and
- responsive to the creation of the partition at the persistence storage repository (451, 452, 453), triggering storage of the payload data (465, 466, 467) in the partition (591, 592, 593) of the persistence storage repository (451, 452, 453).

3. The computer-implemented method of claim 2,
wherein the predetermined configuration is associated with the at least one party.

4. The computer-implemented method of claim 2 or 3,
wherein the entry added to the look-up table is further indicative of at least one access rule for accessing the partition (591, 592, 593).

5. The computer-implemented method of any one of the preceding claims, further comprising:
- obtaining, via the frontend connection and from a further client different than the client, a read request message to retrieve payload data (465, 466, 467) associated with the transaction from the persistence storage repository (451, 452, 453),
- responsive to obtaining the read request message, retrieving the payload data (465, 466, 467) from the persistence storage repository (451, 452, 453), and
- upon retrieving the payload data (465, 466, 467) from the persistence storage repository (451, 452, 453), providing the payload data (465, 466, 467) and optionally the transaction to the further client.

6. The computer-implemented method of claim 5, further comprising:
- establishing a further party associated with the read request message, and
- determining, based on at least one access rule of the look-up table, whether the further party is authorized to access the partition of the persistence storage repository (451, 452, 453),
wherein the payload data (465, 466, 467) and optionally the transaction are selectively provided to the further client responsive to determining that the further client is authorized to access the partition of the persistence storage repository (451, 452, 453).

7. The computer-implemented method of any one of the preceding claims,
wherein the at least one party (581, 582 583) comprises a combination of multiple parties (581, 582 583),
wherein it is determined whether a partition (591, 592, 593) of the persistence storage repository (451, 452, 453) is available for the combination of multiple parties (581, 582 583) .

8. The computer-implemented method of any one of the preceding claims, further comprising:
- interfacing with the persistence storage repository (451, 452, 453) using a storage-technology-agnostic control protocol (511).

9. The computer-implemented method of claim 8,
wherein said interfacing with the persistence storage repository (451, 452, 453) is via a controller module (409) for converting between the storage technology-agnostic control protocol (511) and a technology-specific control protocol (512) .

10. The computer-implemented method of any one of the preceding claims,
wherein the storage request message comprises at least one indicator indicative of whether the transaction is to be signed by the at least one party.

11. The computer-implemented method of any one of the preceding claims,
wherein the node is associated with the at least one party,
wherein the method further comprises:
- responsive to triggering the storage of the payload data (465, 466, 467), triggering replication of the payload data (465, 466, 467) in further persistence storage repositories associated with further nodes of the network of nodes.

12. The computer-implemented method of any one of the preceding claims,
wherein the node is associated with the at least one party,
wherein the method further comprises:
- providing read-only access to the persistence storage repository (451, 452, 453) to further parties (581, 582 583) of the multiple parties (581, 582 583) different than the at least one party.

13. The computer-implemented method of any one of the preceding claims,
wherein the look-up table is stored in the distributed ledger (420).

14. The computer-implemented method of any one of the preceding claims,
wherein the transaction comprises at least one of a checksum of the payload data (465, 466, 467) or a signature of a party associated with smart contract.

15. A computer program comprising program code that can be executed by at least one processor, wherein the processor is configured to perform the computer-implemented method according to any one of the preceding claims upon executing the program code.
